Europäisches Patentamt

European Patent Office

Office européen des brevets

(19)

(11) Veröffentlichungsnummer: **0 272 620 B1**

## (12) EUROPÄISCHE PATENTSCHRIFT

(45) Veröffentlichungstag der Patentschrift: **17.06.92**

(21) Anmeldenummer: **87118715.9**

(22) Anmeldetag: **17.12.87**

(51) Int. Cl.⁵: **B01D 53/36**, B01J 23/22, B01J 23/24, B01J 35/10

(54) **Verfahren zur Entfernung von Stickoxiden aus Abgasen, die bei der Verbrennung von Kohle anfallen.**

(30) Priorität: **24.12.86 DE 3644461**

(43) Veröffentlichungstag der Anmeldung:
**29.06.88 Patentblatt 88/26**

(45) Bekanntmachung des Hinweises auf die Patenterteilung:
**17.06.92 Patentblatt 92/25**

(84) Benannte Vertragsstaaten:
**AT BE CH DE GB LI NL SE**

(56) Entgegenhaltungen:
**EP-A- 0 256 359**
**DE-A- 3 433 197**

**INDUSTRIAL & ENGINEERING CHEMISTRY, Band 25, Nr. 2, Juni 1986, Seiten 179-186, Washington, DC, US; W.C. WONG et al.: "Reduction of NO with NH3 on Al2O3- and TiO2-supported metal oxide catalysts"**

(73) Patentinhaber: **BASF Aktiengesellschaft**
**Carl-Bosch-Strasse 38**
**W-6700 Ludwigshafen(DE)**

(72) Erfinder: **Mross, Wolf Dieter, Dr.**
**Anselm-Feuerbach-Strasse 21**
**W-6710 Frankenthal(DE)**
Erfinder: **Drews, Ronald, Dr.**
**Pranckhstrasse 22**
**W-6700 Ludwigshafen(DE)**
Erfinder: **Scheidsteger, Olaf, Dr.**
**Rheindammstrasse 30**
**W-6800 Mannheim 1(DE)**
Erfinder: **Hess, Klaus, Dr.**
**Sonnenwendstrasse 40**
**W-6702 Bad Duerkheim(DE)**
Erfinder: **Schachner, Helmut Dr.**
**Zum Gruenshof 6**
**W-6909 Waldorf(DE)**

EP 0 272 620 B1

## Beschreibung

Vorliegende Erfindung betrifft die Verwendung von Katalysatoren, die im wesentlichen Titandioxid und eine Katalytisch wirksame Menge am Vanadiumoxid sowie Katalytisch wirksame Mengen an Oxiden des Wolframs und/oder Molybdäns enthalten, zur selektiven Entfernung von $NO_X$ aus den Abgasen von Kohleverbrennungsanlagen durch Reduktion mit Ammoniak.

Für die Entfernung von $NO_X$ aus Abgasen ist bisher eine Reihe von Verfahren bekannt geworden, wobei insbesondere katalytische Verfahren zur Reduktion des $NO_X$ mit reduzierenden Gasen technische Bedeutung erlangt haben. So existieren Verfahren, bei denen das $NO_X$ mit einem Brennstoff, z.B. Erdgas oder Methan, in Gegenwart von Edelmetallen als Katalysatoren nichtselektiv zu Stickstoff reduziert wird. Diese Verfahren haben aber technisch keine Bedeutung erlangt, da neben den Stickoxiden auch der in den Abgasen vorhandene Sauerstoff umgesetzt wird, was neben dem Nachteil einer unerwünscht hohen Steigerung der Temperatur den weiteren Nachteil eines hohen Verbrauchs an Brennstoff hat, abgesehen davon, daß die Edelmetallkatalysatoren nicht vergiftungsfest sind.

Aus diesem Grunde ist auch ein selektiv arbeitendes katalytisches Verfahren entwickelt worden, bei dem die Stickoxide in Gegenwart von Nichtedelmetallkatalysatoren mit Ammoniak selektiv zu Stickstoff reduziert werden. Dieses unter dem Namen SCR-Verfahren (Selective Catalytic Reduction) bekannt gewordene Verfahren hat zunehmend an technischer Bedeutung gewonnen.

Bei diesem Verfahren wird praktisch der in den Abgasen enthaltende Sauerstoff nicht angegriffen und der Verbrauch an Ammoniak richtet sich allein nach dem Stickoxid-Gehalt der zu behandelnden Abgase.

Für dieses Verfahren werden verschiedene Katalysatoren eingesetzt.

In der US-PS 3,279,884 werden Katalysatoren beschrieben, die katalytisch wirksame Mengen an Vanadium-, Molybdän- und/oder Wolframoxiden enthalten. In der DE-PS 12 53 685 werden darüber hinaus auch Katalysatoren beschrieben, die auch Manganoxid und/oder Eisenoxid enthalten können.

In der DE-PS 24 58 888 werden schließlich für den gleichen Zweck auch Katalysatoren genannt, die

1. Titan in Form von Oxiden und
2. wenigstens ein Element aus der Gruppe
    a) Eisen und Vanadium in Form von Oxiden und/oder Sulfaten und/oder
    b) Molybdän, Wolfram, Nickel, Cobalt, Kupfer, Chrom und Uran in Form von Oxiden sowie gegebenenfalls
3. Zinn in Form von Oxiden und/oder
4. Metalle aus der Gruppe Silber, Beryllium, Magnesium, Zink, Bor, Aluminium, Yttrium, Seltene Erdmetalle, Silicium, Niob, Antimon, Wismut und Mangan in Form von Oxiden

enthalten. Diese Katalysatoren können als Vollkatalysatoren oder auch auf übliche Träger aufgebracht eingesetzt werden.

In der DE-OS 34 38 367 werden Katalysatoren beschrieben, die

1. aus einer binären Oxidverbindung des Titans und Siliciums und/oder des Titans und Zirkoniums und/oder einer ternären Oxidverbindung des Titans, Zirkoniums und Siliciums sowie
2. 0 - 5 Gew.% eines Vanadiumoxids und
3. 1 - 15 Gew.% mindestens eines Oxides der Elemente Wolfram, Molybdän, Zinn und Cer

bestehen.

Stickoxide enthaltende Abgase fallen neben der Salpetersäureherstellung vor allem auch bei der industriellen Verfeuerung fossiler Brennstoffe, z.B. in Kraftwerken an. Während die Abgase von Salpetersäureanlagen neben Stickoxiden praktisch nur noch Stickstoff, nicht umgesetzten Sauerstoff und Wasserdampf enthalten, enthalten die aus industriellen Feuerungsanlagen stammenden Abgase zusätzlich, bedingt durch die Zusammensetzung des fossilen Brennstoffes, Schwefeldioxid und bei Abgasen, die aus der Verbrennung von Kohle stammen, je nach Verbrennungsart - ob Feuerungen mit Trocken- oder Schmelzascheabzug, wechselnde Mengen an weiteren Bestandteilen, die auch die Katalysatoren schädigen können, wie Schwermetalle bzw. Schwermetallverbindungen, Halogenverbindungen, wie HCl und HF, wobei deren Gehalt mit zunehmender Feuerungstemperatur steigt. Insbesondere die Schwermetallverbindungen, genannt seien z.B. die Verbindungen des Cadmiums, Bleis, Arsens und Selens, vergiften die eingesetzten Katalysatoren, wodurch deren Aktivität bei zunehmenden Betriebszeiten abnimmt.

Aus der nicht vorveröffentlichten EP 0 256 359 A1 (Prioritätstag 25.07.86, Anmeldetag 24.07.87, Veröffentlichungstag 24.02.88) ist ein Titanoxid enthaltender Katalysator, der auch V, Mo und/oder W aufweisen kann, bekannt, der eine erste Gruppe von Poren mit einem Durchmesser von 10 nm bis zu weniger als 100 nm und eine zweite Gruppe von Poren mit einem Durchmesser von 100 nm bis 12 000 nm aufweist, wobei das Porenvolumen der ersten Gruppe von Poren mindestens 10 % des gesamten Porenvolumens beträgt. Dieser Katalysator wird zur Reduktion von Stickoxiden in Arsenverbindungen enthaltenden Abgasen eingesetzt. Die BET-Oberflächen und insbesondere ein Zusammenhang zwischen BET-Oberfläche und Vanadiumgehalt der Katalysatoren werden in dieser Druckschrift nicht erwähnt.

Zusammenfassend kann festgestellt werden, daß Katalysatoren für das SCR-Verfahren folgenden Bedingungen genügen sollen:

1. Sie sollen selektiv sein und/oder eine möglichst hohe Reduktion des $NO_X$ zu Stickstoff bei möglichst geringer Sauerstoffreduktion gewährleisten,

2. sie sollen möglichst inaktiv bezüglich der Oxidation des in den Abgasen enthaltenden $SO_2$ zu $SO_3$ sein und

3. sie sollen möglichst vergiftungsfest gegenüber den in den Abgasen enthaltenden Schadstoffen sein.

Der vorliegenden Anmeldung lag die Aufgabe zugrunde, ein Verfahren zur Entfernung von Stickoxiden aus Abgasen, die bei der Verbrennung von Kohle anfallen, durch selektive, katalytische Reduktion mit Ammoniak durch die Verwendung von Katalysatoren, die im wesentlichen Titanoxid und katalytisch wirksame Mengen an Vanadiumoxid und an an Oxiden des Wolframs und/oder Molybdäns enthalten - Aktivkomponentenkombinationen, die sich als relativ inaktiv bezüglich der Oxidation des $SO_2$ zu $SO_3$ erwiesen haben -, zu verbessern, wobei die eingesetzten Katalysatoren in Bezug auf die in diesen Verbrennungsabgasen enthaltenen Schadstoffe eine erhöhte Vergiftungsfestigkeit und eine Konstante Anfangsaktivität aufweisen.

Es wurde nun gefunden, daß diese Aufgabe dadurch gelöst werden kann, daß die verwendeten Katalysatoren eine Oberfläche, gemessen nach BET, von 5 bis 60 m$^2$/g, ein Porenvolumen von 0,15 - 0,40 ml/g und einen Gehalt an Poren mit Durchmessern < 20 nm von maximal 35 % aufweisen, und wobei der Vanadiumgehalt im Katalysator bei abnehmender BET-Oberfläche so erhöht ist, daß die aufgrund der geringeren BET-Oberfläche an sich niedrigere Anfangsaktivität des Katalysators ausgeglichen wird.

Überraschenderweise gelingt es mit diesen Katalysatoren ohne prinzipielle Änderung ihrer chemischen Zusammensetzung, eine erhebliche erhöhte Vergiftungsfestigkeit zu erzielen. Dieses Phänomen beruht wahrscheinlich, wie eigene Messungen ergeben haben, auf der Tatsache, daß die erfindungsgemäß eingesetzten Katalysatoren, die eine vergleichsweise kleine Oberfläche und eine geringe Mikroporosität haben, Schwermetalle bzw. Schwermetallverbindungen in erheblich geringerem Maße adsorbieren als Katalysatoren mit einer erheblich größeren Oberfläche und einem hohen Mikroporengehalt.

Vorzugsweise weisen die Katalysatoren eine Oberfläche von 15 bis 50 m$^2$/g auf und einen Gehalt an Poren mit einem Durchmesser von < 20 nm von maximal 20 %. Die erfindungsgemäß eingesetzten Katalysatoren enthalten im wesentlichen Titanoxide sowie Oxide des Vanadiums, Molybdäns und Wolframs, wobei die Komponten Titan und die katalytisch wirksamen Metalle in Atomverhältnisse von 1 : 0,005 bis 1 vorliegen können. Selbstverständlich können die Katalysatoren zusätzlich auch andere für den vorliegenden Zweck bekannte Metalloxide enthalten wie Zinn, Nickel, Cobalt, Kupfer, Chrom und Uran.

Die Katalysatoren werden in üblicher Weise durch Anteigen der Komponenten, Verformen, Trocknen und Calcinieren oder aber auch durch Kopräzipitation, Verformen der teilweise getrockneten Reaktionsmischung, weiteres Trocknen und Calcinieren hergestellt.

Die Oberfläche der erfindungsgemäß verwendeten Katalysatoren wird in an sich bekannter Weise am einfachsten z.B. durch Einsatz von Primärteilen der Aktivkomponenten wie z.B.Titanoxid mit Teilchengrößen > 20 nm oder durch Einhalten einer bestimmten Calciniertemperatur und bestimmten Calcinierdauer eingestellt. Diese kann je nach der spezifischen Zusammensetzung der Katalysatoren variieren, läßt sich aber durch einige orientierende Versuche leicht ermitteln.

Die Katalysatoren lassen sich in beliebiger Form einsetzen, z.B. als Strangpreßlinge, Tabletten, vorzugsweise aber in Form von Wabenkörpern mit durchgehenden parallel zueinander verlaufenden Kanälen.

Die erfindungsgemäße Verwendung erfolgt bei Temperaturen zwischen 300 und 460° C bei Raumgeschwindigkeiten von 1 000 bis 100 000 h$^{-1}$. Der Ammoniak wird im molaren Verhältnis von $NH_3$ : NO von 0,7 bis 1,2 eingesetzt, vorzugsweise wird zur Vermeidung eines $NH_3$-Schlupfes ein molares Verhältnis < 1 gewählt.

Beispiel 1 (Vergleich)

Eine Metatitansäuresuspension mit einem Gehalt von 933 g $TiO_2$ wird mit einer Lösung von 169,3 g Ammonium-p-wolframat in 5 l destilliertem Wasser vermischt und eine Lösung von 5,94 g Ammoniummetavanadat in 3 l destilliertem Wasser zugesetzt. Die Suspension wird in einem beheizten Kneter zu einer plastischen Masse eingedampft. Das Gemisch wird zu Strängen mit einem Durchmesser von 5 mm extrudiert, die Stränge getrocknet (16 h bei 120° C) und bei Temperaturen von

1) 500° C (Katalysator A),
2) 600° C (Katalysator A 1),
3) 700° C (Katalysator A 2) und
4) 800° C (Katalysator A 3)

jeweils 3 Stunden lang calciniert.
Die erhaltenen Katalysatoren haben ein Ti : W : V-Atomverhältnis von 94,36 : 5,24 : 0,4.

Beispiel 2

Wie in Beispiel 1 beschrieben, wurden die Katalysatoren A 1 bis A 3 mit folgenden Ti : W : V-Atomverhältnissen durch entsprechende Variation der zugesetzten Ammoniummetavanadatmengen hergestellt:

1) Katalysator B 1 mit dem Ti : W : V-Atomverhältnis von 94,27 : 5,24 : 0,49.
(Calciniertemperatur wie Katalysator A 1)
2) Katalysator B 2 mit dem Ti : W : V-Atomverhältnis von 94,14 : 5,23 : 0,63.
(Calciniertemperatur wie Katalysator A 2)
3) Katalysator B 3 mit dem Ti : W : V-Atomverhältnis von 92,21 : 5,12 : 2,67.
(Calciniertemperatur wie Katalysator A 3)

Beispiel 3

Die gemäß Beispielen 1 bis 2 hergestellten Katalysatoren A bis A 3 und B 1 bis B 3 wurden mit einem synthetischen Rauchgas mit folgender Zusammensetzung: 1 000 vpm NO, 1 000 vpm $NH_3$, 500 vpm $SO_2$, 5 Vol.-% $O_2$, 10 Vol.-% Wasserdampf, 3,7 vpm $As_4O_6$ (zur Simulation der Schwermetall-Schadstoffe in Kohlerauchgasen), Rest Stickstoff, bei einer Temperatur von 330°C und einer Raumgeschwindigkeit von 93 000 $h^{-1}$ getestet.

Es werden jeweils 1 g Katalysator, der auf Korngrößen von 0,5 bis 1 mm zerkleinert war, eingesetzt.
Der Testreaktor hat einen Durchmesser von 6 mm.

Der bei den einzelnen Katalysatoren ermittelte $NO_X$-Abbau und die Arsenaufnahme sind, ebenso wie die BET-Oberfläche, der Gehalt an Poren mit Durchmessern < 20 nm und die Porenvolumina in der folgenden Tabelle angegeben.

| Katalysator | BET-Oberfl. [m²/g] | Gehalt an Poren < 200 Å 20 nm [%] | Porenvol. [ml/g] | Relative Aktivität K am Testbeginn | Aktivitätsabfall nach 6 Std. | As-Gehalt nach 6 Std. [Gew.-%] |
|---|---|---|---|---|---|---|
| A Vgl.-Kat. | 63 | 54 | 0,26 | 1 | 0,52 | 0,72 |
| A 1 (Vergl.) | 58 | 34 | 0,24 | 0,8 | 0,71 | 0,44 |
| A 2 " | 47 | 17 | 0,22 | 0,63 | 0,93 | 0,22 |
| A 3 " | 12 | 3 | 0,18 | 0,15 | 0,99 | 0,08 |
| B 1 | 56 | 31 | 0,24 | 1,03 | 0,73 | 0,42 |
| B 2 | 42 | 16 | 0,21 | 1,01 | 0,94 | 0,23 |
| B 3 | 15 | 4 | 0,19 | 1,00 | 0,99 | 0,10 |

In der obigen Tabelle wurde die Anfangsaktivität des Vergleichskatalysators A = 1 gesetzt und die Aktivitäten der übrigen Katalysatoren in Relation hierzu gesetzt. Hierbei wurde von einer Geschwindigkeitskonstante Gebrauch gemacht, die

nach der Formel

$$K = - SV \times \ln (1 - \eta\ NO_X)$$

ermittelt wurde, wobei SV die Raumgeschwindigkeit (93 000 h⁻¹) und $\eta$ NO$_X$ der gemessene NO$_X$-Umsatz bedeuten.

Bei der Ermittlung des Aktivitätsabfalls wurde die Aktivität nach 6 Stunden Testzeit jedes Katalysators durch seine jeweilige Anfangsaktivität dividiert.

Aus der Tabelle ist zu ersehen, daß die Vergleich-Katalysatoren der Reihe A bis A 3 mit jeweils gleichen Vanadiumgehalten, aber unterschiedlichen BET-Oberflächen, Gehalten an Poren < 20 nm und Porenvolumina und daraus resultierender unterschiedlicher Anfangsaktivitäten einen geringeren Aktivitätsabfall und einen geringeren As-Gehalt am Ende der Testperiode aufweisen, wenn Werte für BET-Oberfläche, Gehalt am Poren < 20 nm und Porenvolumen verkleinert werden.

Die an sich niedrigere relative Anfangsaktivität der Vergleich-Katalysatoren A 1 bis A 3 wird ausgeglichen durch eine Erhöhung des Vanadiumgehaltes, wie dies an den Ergebnissen mit den Katalysatoren B 1 - B 3 veranschaulicht wird, ohne daß hierdurch der Aktivitätsabfall und der As-Gehalt nach 6 Stunden beeinflußt wird.

**Patentansprüche**

1. Verwendung von Katalysatoren, die im wesentlichen Titanoxid und eine katalytisch wirksame Menge an Vanadiumoxid sowie katalytisch wirksame Mengen an Oxiden des Wolframs und/oder Molybdäns enthalten,
wobei die Katalysatoren eine Oberfläche, gemessen nach BET, von 5 bis 60 m²/g, ein Porenvolumen von 0,15-0,40 ml/g und einen Gehalt an Poren mit Durchmessern < 20 nm von maximal 35% aufweisen, und
wobei der Vanadiumgehalt im Katalysator bei abnehmender BET-Oberfläche so erhöht ist, daß die aufgrund der geringeren BET-Oberfläche an sich niedrigere Anfangsaktivität des Katalysators ausgeglichen wird,
zur Entfernung von Stickoxiden aus Abgasen, die bei der Verbrennung von Kohle anfallen, durch selektive katalytische Reduktion mit Ammoniak.

2. Verwendung nach Anspruch 1, dadurch gekennzeichnet, daß der Gehalt an Poren mit Durchmessern < 20 nm maximal 20% beträgt.

3. Verwendung nach Ansprüchen 1 bis 2, dadurch gekennzeichnet, daß die Oberfläche 10 bis 50 m²/g beträgt.

**Claims**

1. The use of a catalyst essentially comprising titanium oxide and a catalytically effective amount of vanadium oxide and catalytically effective amounts of oxides of tungsten and/or molybdenum, the catalysts having a surface area, measured by the BET method, of from 5 to 60 m²/g, a pore volume of from 0.15 to 0.40 ml/g and a content of pores having diameters of < 20 nm of at most 35%, and the vanadium content in the catalyst being increased with decreasing BET surface area so that the initial activity of the catalyst, which is lower per se due to the lower BET surface area, is compensated, for removing nitrogen oxides from offgases produced on combustion of coal, by selective catalytic reduction by means of ammonia.

2. The use as claimed in claim 1, wherein the content of pores having diameters of < 20 nm is at most 20%.

3. The use as claimed in claim 1 or 2, wherein the surface area is from 10 to 50 m²/g.

**Revendications**

1. Utilisation de catalyseurs qui contiennent essentiellement de l'oxyde de titane et une proportion catalytiquement active d'oxyde de vanadium, tout comme des proportions catalytiquement actives d'oxydes du tungstène et/ou du molybdène,
où les catalyseurs présentent une surface, mesurée selon BET, de 5 à 60 m²/g, un volume des pores de 0,15 à 0,40 ml/g et une teneur en pores possédant des diamètres de 20 nm d'au maximum 35% et
où la teneur en vanadium dans le catalyseur pour une surface BET décroissante s'élève au point que soit compensée l'activité initiale du catalyseur en soi inférieure en raison de la surface BET plus petite,
en vue de l'élimination d'oxydes d'azote de gaz résiduaires ou d'échappement qui se forment lors de la combustion de charbon par réduction catalytique sélective avec de l'ammoniac.

2. Utilisation suivant la revendication 1, caractérisée en ce que la teneur en pores avec des diamètres de 20 nm atteint 20% au maximum.

3. Utilisation suivant les revendication 1 et 2, caractérisée en ce que la surface varie de 10 à 50 m²/g.